# EUROPEAN PATENT SPECIFICATION

(11) **EP 1 907 499 B1**
(45) Date of publication and mention of the grant of the patent: **28.06.2017**
(21) Application number: 06748070.7
(22) Date of filing: 30.06.2006
(51) Int. Cl.: C09J 103/00

(54) **STARCH-BASED ADHESIVE COMPOSITION, METHOD OF MANUFACTURE AND METHOD OF GLUING WOOD-BASED MATERIALS USING IT**
KLEBSTOFFZUSAMMENSETZUNG AUS STÄRKE, HERSTELLUNGSVERFAHREN UND DESSEN EINSATZ IN EINEM KLEBVERFAHREN FÜR HOLZ-BASIERTE MATERIALIEN
COMPOSITION ADHÉSIVE À BASE D'AMIDON, MÉTHODE DE PRÉPARATION ET MÉTHODE DE COLLAGE DE MATÉRIAUX À BASE DE BOIS LA METTANT EN OEUVRE

(30) Priority: 01.07.2005 EP 05106006
(43) Date of publication of application: 09.04.2008
(73) Proprietor: Akzo Nobel Coatings International BV, 6800 SB Arnhem (NL)
(72) Inventor: KHABBAZ, Farideh, S-167 38 Bromma (SE); ERIKSSON, Per, Anders, S-131 35 Nacka (SE); FARE, Joanna, S-141 38 Huddinge (SE); FURBERG, Anna, Kristina, S-174 46 Sundbyberg (SE)
(74) Representative: Akzo Nobel IP Department
(86) International application number: PCT/SE2006/050231
(87) International publication number: WO 2007/004978

(56) References cited:
- EP-A- 0 948 959
- WO-A-01/85441
- GB-A- 2 084 588
- US-A- 3 361 585
- US-A- 4 687 809
- US-B1- 6 207 176
- US-B1- 6 440 204

## Description

The present invention relates to an adhesive composition, a method of manufacturing an adhesive composition, a method of gluing wood based materials and to a wood based product.

### Introduction

Formaldehyde based resins are widely used in adhesive compositions used for gluing wood based materials. Examples are multilayered products comprising a number of veneers glued together to form products used in the manufacture of, e.g., furniture, or to form plywood. In the furniture industry there is also common to glue a veneer onto a particle- or fibre board. Also flooring materials usually comprise several glue lines joining layers of wood based materials. Upon curing a formaldehyde based resin, formaldehyde may be released both during the manufacture of the product and also afterwards during use of the product. Formaldehyde present in indoor air is a major concern since many years for health reasons.

There is an increasing demand for glued wood based products such as furniture materials, flooring materials and other indoor building materials which meet the more severe emission standards coming into force.

As an alternative to adhesive compositions comprising formaldehyde based resins adhesives based on polymer dispersions of e.g. polyvinyl acetate is available. However, when making compression-moulded products by glueing together layers of veneers and pressing the structure into a certain shape it is important to minimise the so called "spring back" of the glued structure when it is released from the mould. Polyvinyl acetate based adhesives generally give bad results in terms of spring back.

It is also important that a compression-moulded product substantially keeps its shape during use, i.e., when subjected to a load. This property can be measured by a so called "fatigue test", used in e.g. for furniture products, where a compression-moulded product is subjected to a large number of cycles of a load.

As an alternative to formaldehyde based resins in wood adhesive compositions also starch based adhesives have been proposed. Imam et al., "Wood Adhesive from Crosslinked Poly(vinyl alcohol) and Partially Gelatinized Starch: Preparation and Properties", Starch/Stärke 51 (1999) Nr. 6, S. 225-229, discloses an adhesive composition comprising starch and polyvinyl alcohol, the composition further comprising a melamine resin. The pressing temperature needed is very high. US 6,440,204 describes adhesive and binder compositions comprising a potato peel product characterized on a dry solids basis by at least 30% starch, at least 5% protein and at least 2% fibers. US 2,051,025, US 2,102,937, US 3,487,033, US 3,355,307 disclose starch based adhesives used for making corrugated paperboard. WO 03/069061 A1 discloses a starch based adhesive used in making a paperboard product.

However, a general problem encountered with prior art starch based adhesive compositions is the viscosity increase already at moderate dry contents. A too high viscosity makes spreading of an adhesive composition difficult. A sufficient dry content is generally needed to obtain good gluing properties such as glue strength and no spring back at compression moulding. Thus, a major issue is how to increase the dry content and still be able to handle and use the adhesive in a good way.

Also, partially gelatinised starch contains particles or granules of starch which are partly or completely un-gelatinised which may settle during storage. Thus, the storage stability is often bad.

Thus, technical solutions are still needed for how to further improve starch based adhesive compositions in order to make them more suitable for gluing wood based materials.

Accordingly, the present invention provides an adhesive composition which is based on starch in which the dry content can be high while still having a comparatively low viscosity and which gives excellent gluing quality and good storage stability. Also, a method of gluing wood based materials is provided and a wood based product. The wood based products made according to the invention suitably show good results in, e.g., bond strength, water resistance, low spring back and shape-retention during load for compression moulded veneers (fatigue test).

By "solids content" of an adhesive composition is herein meant the non-water part of the adhesive composition.

### The invention

The adhesive composition, according to the invention, comprises at least partly gelatinised starch and one or more polymers (P) containing a primary amine group as defined in claim 1.

The invention further relates to a method of manufacturing an adhesive composition comprising mixing starch and one or more polymers (P) containing a primary amine group in an aqueous phase at an elevated temperature to at least partly gelatinise the starch. Suitably, starch is added to an aqueous composition comprising the one or more polymers (P). The temperature may be elevated in the aqueous composition before starch is added. Alternatively, the temperature is elevated after starch has been added.

The invention further relates to a wood based product comprising pieces of wood based material joined with an adhesive comprising starch and one or more polymers (P) containing a primary amine group.

The required temperature for at least partly gelatinise the starch depends on the type of starch used, but is generally at least 50°C. The at least partly gelatinised starch is obtainable by subjecting an aqueous mixture comprising starch to an elevated temperature of suitably from about 50 to about 99°C, preferably from about 50 to about 80°C, most preferably from about 55 to about 70°C. The at least partly gelatinised starch is obtainable by maintaining the aqueous mixture comprising starch to the elevated temperature to suitably at least about 0.1 minutes, also suitably from about 0.1 to about 180 minutes, preferably at least 1 minute, also preferably from about 1 to about 60 minutes, most preferably at least 10 minutes, also most preferably from about 10 to about 40 minutes.

In one embodiment of the invention, embodiment A, the starch is partly gelatinised to a less degree and is obtainable by subjecting an aqueous mixture comprising starch to an elevated temperature of preferably from about 50 to about 70°C, most preferably from about 55 to about 65°C. In this case, the partly gelatinized starch is obtainable by maintaining the aqueous mixture comprising starch to the elevated temperature for preferably at least 1 minute, also preferably from about 1 to about 40 minutes, most preferably at least 5 minutes, also most preferably from about 5 to about 30 minutes.

In another embodiment of the invention, embodiment B, the starch is partly gelatinised to a higher degree, or completely gelatinised, and is obtainable by subjecting an aqueous mixture comprising starch to an elevated temperature of preferably from about 70 to about 99°C, most preferably from about 80 to about 95°C. In this case, the partly gelatinised starch is obtainable by maintaining the aqueous mixture comprising starch to the elevated temperature for preferably at least 1 minute, also preferably from about 1 to about 240 minutes, most preferably at least 10 minutes, also most preferably from about 10 to about 100 minutes.

The amount of starch in the adhesive composition is from 15 to 40 weight %, preferably from about 20 to about 40 weight %, more preferably from about 30 to about 40 weight %, alternatively more preferably from about 20 to about 35 weight %.

The amount of the one or more polymers (P) in the adhesive composition, is from 2 to 25 weight %, preferably from about 2 to about 15 weight %.

The amount of the sum of starch and the one or more polymers (P) in the adhesive composition is suitably from about 20 to about 70 weight %, preferably from about 35 to about 60 weight %, and more preferably from 35 to 55 weight %,.

The solids content in the adhesive composition is suitably from about 20 to about 70 weight %, preferably from about 35 to about 60 weight %, more preferably from about 40 to about 50 weight %, most preferably from about 42 to about 50 weight %.

Examples of suitable starches are native starches and modified starches made from, e.g. potato, corn, wheat, rice, peas etc., such as: acetylated degraded starch, alkyl succinic acid modified starch, oxidated starch, hydroxypropylated starch, cationic starch, amylopectin starch, high amylose acetylated starch, tapioka starch, native potato starch, native corn starch, native wheat starch, native rice starch, and, native pea starch.

The one or more polymers (P) comprise a primary amine group. The one or more polymers (P) belong to the group of polyvinyl amine, and poly(vinylalcohol-co-vinylamine). Preferably polymer (P) is polyvinyl amine.

Polyvinyl amine is usually made by hydrolysing polyvinyl formamide to a certain degree. By "polyvinyl amine" is herein meant a polyvinyl amine wherein the mole ratio of amine groups to formamide groups is from 5-95 to 100:0. If the mole ratio of amine groups to formamide groups is less than 5:95 the polymer is defined as a polyvinyl formamide. The mole ratio of amine groups to formamide groups in the polyvinyl amine is preferably from about 10:90 to about 100:0, more preferably from about 50:50 to about 100:0, most preferably from about 80:20 to about 100:0.

Poly(vinyl alcohol-co-vinyl amine) is usually made by co-polymerising vinyl acetate and vinyl formamide followed by hydrolysis which gives a co-polymer having vinyl alcohol and vinyl amine units. There may also be remaining formamide groups in the co-polymer and also remaining acetate groups. The mole ratio of amine groups to formamide groups in the polyvinyl alcohol-co-vinyl amine) is from 5:95 to 100:0. If the number ratio of amine groups to formamide groups is less than 5:95 the polymer is defined as a poly(vinyl alcohol-co-vinyl formamide). The mole ratio of hydroxyl groups to acetate groups in the poly(vinyl alcohol-co-vinyl amine) or poly(vinyl alcohol-co-vinyl amide) is suitably from about 25:75 to 100:0, preferably from about 75:25 to 100:0. The mole ratio of amine and formamide groups to hydroxyl and acetate groups in the poly(vinyl alcohol-co-vinyl formamine) or poly(vinyl alcohol-co-vinyl formamide) is suitably from about 3:97 to about 100:0, preferably from about 10:90 to about 100:0, most preferably from about 25:75 to about 100:0.

The one or more polymers (P) have suitably a weight average molecular weight of from about 1.000 to about 1.000.000 g/mol, preferably from about 10.000 to about 800.000 g/mol, more preferably from about 20.000 to about 600.000 g/mol, most preferably from about 50.000 to about 500.000 g/mol.

In embodiment A of the invention, the viscosity (Brookfield, 12 rpm, spindle 4, at 20°C) of the adhesive composition is suitably lower than 100.000 mPa*s, preferably from about 5.000 to about 50.000 mPa*s, most preferably from about 10.000 to about 25.000 mPa*s.

The adhesive composition may further comprise additives such as viscosity adjusting agents and fillers such as kaolin, wheat meal, soy meal, walnut shell meal, or other known to be suitable for use in wood adhesive formulations.

The adhesive composition may also comprise inorganic- or organic salts which may have originated from a solution of the one or more polymers (P) used when making the starch based adhesive composition. A part of the one or more polymers (P) may be ionically charged, preferably cationically charged. The amount of negative counter-ions of the salts in the adhesive composition can be from 0 to about 10 weight %, or from about 0.1 to about 5 weight %, or from about 0.2 to about 1 weight %.

The starch based adhesive composition may also be combined with a further composition, suitably an adhesive composition, based on a dispersion of a polymer or copolymer of one or more ethylenically unsaturated monomers, which does suitably not comprise any amine or amide groups. In this case, the amount of starch based adhesive is suitably from about 10 to about 99 weight %, preferably from about 25 to about 85 weight %, also preferably from about 25 to about 75 weight %, most preferably from about 50 to about 75 weight %, based on the total of wet adhesive. This further adhesive composition may, besides being mixed-in with the starch based adhesive, also be used as a separate component in combination with the starch based adhesive composition.

In a further embodiment, the starch based adhesive composition may comprise a polymer or copolymer of one or more ethylenically unsaturated monomers, which does suitably not comprise any amine or amide groups.

Examples of suitable polymers or copolymers of one or more ethylenically unsaturated monomers are vinyl ester homopolymers such as polyvinyl acetate, copolymers of vinylesters such as ethylene-vinyl acetate copolymer (EVA) or copolymers of vinylacetate with acrylic monomers such as methylmethacrylate or butylacrylate, styrene-butadiene rubber (SBR), and polyacrylates.

Generally, the inclusion of polymers or copolymers of one or more ethylenically unsaturated monomers, of the types listed above, in the starch based adhesive composition, or in combination with the starch based adhesive composition, may improve the bonding characteristics, such as fiber tear of a veneered or laminated product.

The adhesive composition may also be combined with a cross-linker shortly before use. Suitable cross-linkers are those which are reactive to amino and/or hydroxyl groups. Examples of crosslinkers are: isocyanates, monomers or polymers containing acetoacetoxy groups, adipic acid, melamine formaldehyde resin, urea formaldehyde resin, melamine salts, aldehydes such as glutaraldehyde, glyoxal, and polymeric aldehydes such as dialdehyde starches, and, complexing agents such a zirconium salts. Preferably polymers containing acetoacetoxy groups are used as cross-linker such as acetoacetylated polyvinyl alcohol. If used, the amount of the cross-linker in the adhesive composition is suitably up to about 30 weight %, or from about 0.1 to about 30 weight %, preferably from about 0.1 to about 10 weight %, most preferably from about 0.5 to about 5 weight %.

The invention further relates to a method of gluing pieces of wood based materials comprising applying the adhesive composition according to the present invention onto one or more pieces of a wood based material, and joining the one or more pieces with one or more further pieces of a material, preferably wood based material.

In one embodiment, the method suitably comprises applying the adhesive composition according to the present invention onto a piece of wood based material, contacting the surface with applied adhesive composition with a surface of another piece of wood based material, thereby joining the pieces through the formation of an adhesive joint between the pieces.

By wood-based materials is herein, beside solid wood, also included wooden materials such as fibre-, chip-, and particleboard materials. The surfaces to be joined may be of the same or different type of wood based material.

The wood based material can be any type and form of wood based material such as chips, fibres, sheets, laminas, veneers, pieces etc.

In one embodiment, when manufacturing laminated products, the method suitably comprises application of the adhesive composition according to the invention onto a surface so that the glue joint will comprise an originally applied amount of from about 0.1 to about 500 g/m². The applied amount depends on the product to be produced: for compression moulded veneers it is preferably from about 50 to about 200 g/m², for laminated flooring material it is preferably from about 100 to about 160 g/m², and for laminated beams it is preferably from about 180 to about 500 g/m². The suitable upper limit also depends on which type of wood based material that is applied with the solution. The adhesive composition may be applied on one or both of the surfaces to be joined. If applied on both surfaces, the sum of the amounts applied on each surface will correspond to the preferred amounts for the whole glue joint specified.

When making compression-moulded veneers, the method suitably comprises the joining of more than two pieces of wood based materials, preferably from 2 to 15.

In one embodiment, the method comprises gluing pieces of wood based materials wherein the pieces of wood based material are wood chips, in which the term "wood chips" herein includes chips, shavings, flakes, sawdust particles and any similar finely divided wood based material. In this case the wood based product is a composite product such as a chip-, particle- or fibre board, or an oriented strand board.

The moisture content of the wood chips to be used is suitably from about 0 to about 20 weight %, preferably from about 1 to about 10 weight %, more preferably from about 1.5 to about 5 weight %.

The weight ratio wood chips to adhesive composition, calculated as dry weight, is suitably from about 100:1 to about 1:1, preferably from about 50:1 to about 2:1, more preferably from about 30:1 to about 2.5:1, most preferably from about 15:1 to about 3:1.

The moisture content of the mixture of wood chips and adhesive composition at the beginning of the pressing is suitably from about 3 to about 25 weight %, preferably from about 5 to about 20 weight %, most preferably from about 7 to about 15 weight %.

The application of the adhesive composition is preferably followed by pressing. The pressing suitably takes place at an elevated temperature. The pressing temperature depends on which wood based product intended to be manufactured but can suitably be from about 0 to about 250 °C and preferably from about 70 to about 200°C.

For laminated or veneered products, the pressing temperature, when no cross-linker has been added to the adhesive composition, is suitably from about 0°C to about 200 °C, preferably from about 20 to about 150°C, even more preferably from about 50 to about 130°C, most preferably from about 70 to about 130°C. When a cross-linker has been added to the adhesive composition, the pressing temperature may sometimes be decreased depending on the efficiency of the cross-linker.

For particle-, chip-, and fibreboard products, the pressing temperature is preferably from about 100 to about 225 °C, most preferably from about 150 to about 200°C. For laminated products, such as plywood, laminated flooring or veneered flooring products, the pressing temperature is preferably from about 70 to about 175 °C, most preferably from about 90 to about 160 °C.

The pressing time and pressing temperature are linked so that lower pressing temperatures generally require longer pressing times. The wood based product to be produced does also determine suitable pressing temperatures and pressing times. The pressing time is suitably at least about 10 s, also suitably from about 10 s to about 60 minutes, preferably at least about 30 s, also preferably from about 30 s to about 30 minutes, most preferably at least about 1 minute, also preferably from about 1 to about 15 minutes.

In one embodiment of the method the adhesive composition is dried after application and later remoistened by adding water or an aqueous solution before contacting the surface having the adhesive composition applied with another surface. The aqueous solution may comprise a polymer comprising amine or amide groups, of a kind as already described hereinbefor, or a cross-linker which is suitably reactive to amine and/or hydroxyl groups.

In one embodiment of the method, preferably when producing the wood based material is in the form of wood chips, the piece or pieces of wood based material is first contacted with an aqueous solution comprising a cross-linker. Suitable cross-linkers are these which are reactive to amine and/or hydroxyl groups.

Examples of cross-linkers in the two above-described embodiments are: isocyanates, monomers or polymers containing acetoacetoxy groups, adipic acid, melamine formaldehyde resin, urea formaldehyde resin, melamine salts, aldehydes such as glutaraldehyde, glyoxal, and polymerie aldehydes such as dialdehyde starches, and, complexing agents such a zirconium salts. Preferably polymers containing acetoacetoxy groups are used as cross-linker such as acetoacetylated polyvinyl alcohol.

In one embodiment, the wood based product of the invention comprises one or more layers, joined with one or more adhesive joints comprising starch and one or more polymers (P) containing an amide group or an amide group.

The wood based product of the invention can be a flooring material, a veneered furniture material, plywood, a wall panel, a roofing panel, a laminated beam, or a composita product such as a particle board, fibre board, chip board, oriented strand board. The wood based product of the invention is preferably plywood, a veneered furniture material, veneered flooring, laminated flooring or a particle board.

In one embodiment, the wood based product of the invention comprises a composita product comprising wood based chips joined together with an adhesive composition according to the invention. The composite product suitably comprises from about 70 to about 98 weight %, preferably from about 80 to about 90 weight %, of wood based material, from about 2 to about 25 weight %, preferably from about 5 to about 15 weight %, of starch, and from about 0.5 to about 10 weight %, preferably from about 2 to about 6 weight % of the one or more polymers (P), the amounts calculated as dry weight of the composite product.

The composite product is preferably a chip-, particle- or fibre board, or an oriented strand board.

The amount of starch in the one or more dry adhesive joints in the finished wood based product is suitably from about 10 to about 75 weight %, preferably from about 25 to about 65 weight %, most preferably from about 40 to about 60 weight %.

The amount of the one or more polymers (P) in the one or more dry adhesive joints in the finished wood based product is suitably from about 25 to about 90 weight %, preferably from about 35 to about 75 weight %, most preferably from about 40 to about 60 weight %.

The invention is further illustrated by means of the following non-limiting examples. Parts and percentages relate to parts by weight respectively percent by weight, unless otherwise stated.

### Examples

Example 1: A starch based adhesive was made by mixing 66 g of an aqueous solution of about 7.5 weight % polyvinyl amine (Lupamin® 9095 from BASF), 5 g water and 37.5 g corn starch (C*Gum NC 03432 from Cerestar, 10% moisture content). The starch was partly gelatinised by stirring the mixture at 63°C for 20 minutes. The number ratio of amine groups to formamide groups in the polyvinyl amine was more than 90:10. The weight average molecular weight of the polyvinyl amine was 340.000 g/mol. The dry content of the adhesive was measured to 45 weight %. The viscosity of the composition was measured to 15.000 mPa*s at 20°C (Brookfield, 12 rpm, spindle 4).

Reference Example 2: A starch based adhesive was made by mixing 66 g of an aqueous solution of 17 weight % polyvinyl formamide (Lupamin® 9000 from BASF), 5 g water and 37.5 g corn starch (C*Gum NC 03432 from Cerestar, 10% moisture content). The starch was partly gelatinised by stirring the mixture at 63°C for 20 minutes. The number ratio of amine groups to formamide groups in the polyvinyl formamide was 0:100. The weight average molecular weight of the polyvinyl formamide was 340.000 g/mol. The dry content of the adhesive was measured to 41 weight %. The viscosity of the composition was measured to 65.000 mPa*s at 20°C (Brookfield, 12 rpm, spindle 4).

Example 3: A starch based adhesive was made by mixing 66 g of an aqueous solution of 17 weight % poly(vinyl alcohol-co-vinyl amine) (custom-made from Erkol), 5 g water and 37.5 g corn starch (C*Gum NC 03432 from Cerestar, 10% moisture content). The starch was partly gelatinised by stirring the mixture at 63°C for 20 minutes. The poly(vinyl alcohol-co-vinyl amine) had a degree of hydrolysis of 99 % of the acetate groups. The mole ratio amine and formamide groups to hydroxyl and acetate groups in the poly(vinyl alcohol-co-vinyl amine) or poly(vinyl alcohol-co-vinyl amide) being around 10:90. The weight average molecular weight of the polymer being about 30.000 and 50.000 g/mol. The dry content of the adhesive was measured to 42 weight %. The viscosity of the composition was measured to 42.500 mPa*s at 20°C (Brookfield, 12 rpm, spindle 4).

Reference Example 4: A starch based adhesive was made by mixing 66 g of an aqueous solution of 17 weight % polyvinyl alcohol (Kuraray Poval® 217 from Kuraray), 5 g water and 37.5 g corn starch (C*Gum NC 03432 from Cerestar, 10% moisture content). The starch was partly gelatinised by stirring the mixture at 63°C for 20 minutes. The polyvinyl alcohol had a degree of hydrolysis of 87-89 %. The dry content of the adhesive was measured to 42 weight %. The viscosity of the composition was measured to 141.000 mPa*s at 20°C (Brookfield, 12 rpm, spindle 4).

It is concluded from Examples 1-4 that the viscosity of the starch based adhesive is significant lower when a polymer according to the invention (Examples 1 and 3) is used instead of polyvinyl alcohol.

Example 5: An adhesive composition as in Example 1 was mixed with a polyvinyl acetate adhesive (Mowilith® DHSS3 from Celanese) in the ratio 50:50. The polyvinyl acetate adhesive had a dry content of 50 weight %. The mixed adhesive was tested by gluing together 13 veneers of beech with an applied adhesive amount of 150 g/m², and compression moulding the assembly with a pressing time of 10 minutes and at a pressing temperature of 90°C. The result was no spring back, good strength and 60-70 % (good) fiber tear.

Reference Example 6: A polyvinyl acetate adhesive, the same as used in Example 5 was tested on its own by gluing together 13 veneers of beech in the same way as in Example 5. The result was good strength and 60 % (good) fiber tear, but significant spring back.

Example 7: An adhesive composition as in Example 1 was made with the difference that the gelatinisation was performed at 90°C for 60 minutes. The result was a soft, spreadable paste-like composition. When making a compression moulded product as in Example 5 the result was no spring back, good strength and 60-80 % (good) fiber tear.

Example 8: A starch based adhesive according to Example 1 was applied onto a 15 x 15 cm particle board in an amount of 130 g/m². A veneer of beech (0.6 mm) was then pressed onto the board. The assembly was pressed during 1 minute at 130°C. The gluing strength measured as fiber tear (chisel) was measured on a warm assembly (directly after pressing) and on a cold assembly, respectively, after pressing.

The fiber tear (warm) was 100% and the fiber tear (cold) was also 100%.

Example 9: A starch based adhesive according to Example 1 was applied onto a 15 x 15 cm particle board in an amount of 130 g/m². A veneer of beech (0.6 mm) was then pressed onto the board. The assembly was pressed during 10 minutes at 90°C. The gluing strength measured as fiber tear (chisel) was measured on a warm assembly (directly after pressing) and on a cold assembly, respectively, after pressing. The same procedure was repeated but using an adhesive according to Example 1 to which an aqueous solution comprising 17 weight % acetoacetylated polyvinyl alcohol (AAPVA) had been added in an amount of 10 parts per 100 parts of the adhesive composition according to Example1. The results are given in Table 1.

**Table 1.**

| | Fiber tear, warm (%) | Fiber tear, cold (%) |
|---|---|---|
| starch + polyvinylamine | 0 | 10-20 |
| starch + polyvinylamine + AAPVA | 60-70 | 100 |

It is concluded that the addition of a cross-linker (AAPVA) increases the bonding strength.

### Example 10:

A particle board was manufactured by mixing 864 g wood chips, having a moisture content of 2 weight %, with 285 g of an adhesive composition made according to Example 1. The chips mixture was formed into a sheet of 30x30 cm and pressed at 185°C for three minutes into a board of 16 mm thickness. The sequence of pressure was 160 kg/cm² during 30 s, 40 kg/ cm² during 2.5 min and no pressure during the last 30 s. The tensile strength (internal bond, IB) was measured by gluing pieces of 5 x 5 cm onto two metal blocks and tearing them apart. Thickness swelling (TSW) and water absorption (ABS) were also measured. Thickness swelling was measured by determining the degree of swelling after a piece of 5 x 5 cm had been immersed in water (20°C, 24 hrs). Water absorption was measured by determining the weight increase after a piece of 5 x 5 cm had been immersed in water (20°C, 24 hrs).

The IB value was 750 kPa, TSW 33.2% and ABS (24 h) was 97.1%.

### Example 11:

A particle board was manufactured by first mixing 864 g wood chips, having a moisture content of 2 weight %, with 28 g of an aqueous solution comprising 11 weight % of acetoacetylated polyvinyl alcohol (AAPVA) and thereafter mixing in 285 g of an adhesive composition made according to Example 1. The chips mixture was formed into a sheet of 30x30 cm and pressed at 185°C for three minutes into a board of 16 mm thickness. The sequence of pressure was 160 kg/cm² during 30 s, 40 kg/ cm² during 2.5 min and no pressure during

The IB value was 970 kPa, TSW 29.1% and ABS (24 h) was 98.2%.

## Claims

1. Adhesive composition comprising at least partly gelatinised starch and one or more polymers (P) containing a primary amine group, wherein the one or more polymers (P) belong to the group of polyvinyl amine, and poly(vinylalcohol-co-vinyl amine), and wherein the amount of starch in the adhesive composition is from 15 to 40 weight %, and the amount of one or more polymers (P) in the adhesive composition is from 2 to 25 weight %.

2. Adhesive composition according to claim 1, wherein the amount of the sum of starch and the one or more polymers (P) in the adhesive composition is from 35 to 60 weight %.

3. Adhesive composition according to any one of claims 1-2, wherein the amount of the sum of starch and the one or more polymers (P) in the adhesive composition is from 35 to 55 weight %.

4. Adhesive composition according to any one of claims 1-3, wherein if a polymer (P) containing a primary amine group is a polyvinylamine, the mole ratio of amine groups to formamide groups is from 5:95 to 100:0.

5. Adhesive composition according to any one of claims 1-4, wherein polymer (P) is polyvinyl amine.

6. Adhesive composition according to any one of claims 1-5, comprising a polymer or copolymer of one or more ethylenically unsaturated monomers, which does suitably not comprise any amine or amide groups.

7. Adhesive composition according to claim 6, wherein the polymer or copolymer is a vinyl ester homopolymer or a vinyl ester copolymer.

8. Adhesive composition according to any one of claims 1-7, comprising a polymer containing acetoacetoxy groups.

9. Adhesive composition according to any one of claims 1-8 comprising a further adhesive composition, based on a dispersion of a polymer or copolymer of one or more ethylenically unsaturated monomers.

10. Adhesive composition according to claim 9, wherein the polymer or copolymer is a vinyl ester homopolymer or a vinyl ester copolymer.

11. Adhesive composition according to any one of claims 9-10, wherein the amount of starch based adhesive is from 25 to 75 weight %, based on the total of wet adhesive.

12. Method of manufacturing an adhesive composition according to any one of claims 1-11, comprising mixing starch and one or more polymers (P) containing a primary amine group, in an aqueous phase at an elevated temperature from 55 to 99 °C to at least partly gelatinise the starch, wherein the one or more polymers (P) belong to the group of polyvinyl amine, and poly(vinylalcohol-co-vinyl amine), and wherein the amount of starch in the adhesive composition is from 15 to 40 weight % and the amount of one or more polymers (P) in the adhesive composition is from 2 to 25 weight %.

13. Method according to claim 12, wherein the elevated temperature is from 55 to 65 °C.

14. Method according to any one of claims 12-13, wherein the elevated temperature is maintained for at least 1 minute.

15. Method of gluing pieces of wood based materials comprising applying the adhesive composition of any one of claims 1-11 onto one or more pieces of a wood based material, and joining the one or more pieces with one or more further pieces of a material.

16. Method according to claim 15, comprising applying the adhesive composition onto a piece of wood based material, contacting the surface with applied adhesive composition with a surface of another piece of wood based material, thereby joining the pieces through the formation of an adhesive joint between the pieces

17. Method according to any one of claims 15-16, comprising the joining of more than two pieces of wood based materials.

18. Method according to any one of claims 15-17, comprising gluing pieces of wood based materials wherein the pieces of wood based material are wood chips.

19. Wood based product comprising pieces of wood based material joined with an adhesive composition according to any one of claims 1-11.

20. Wood based product according to claim 19, comprising one or more layers, joined with one or more adhesive joints comprising an adhesive composition according to any one of claims 1-11.

21. Wood based product according to claim 19, comprising wood based chips joined with an adhesive composition according to any one of claims 1-11.

## Patentansprüche

1. Klebstoffzusammensetzung mit zumindest teilweise gelierter Stärke und einem oder mehreren, eine primäre Aminogruppe enthaltenden Polymeren (P), wobei das eine oder die mehreren Polymere (P) zu der Gruppe aus Polyvinylamin und Poly(vinylalkohol-co-Vinylamin) gehören, und wobei die Menge an Stärke in der Klebstoffzusammensetzung zwischen 15 und 40 Gew-% beträgt und die Menge von einem oder mehreren Polymeren (P) in der Klebstoffzusammensetzung zwischen 2 und 25 Gew-% beträgt.

2. Klebstoffzusammensetzung nach Anspruch 1, wobei die Menge der Summe aus Stärke und dem einen oder den mehreren Polymeren (P) in der Klebstoffzusammensetzung zwischen 35 und 60 Gew-% beträgt.

3. Klebstoffzusammensetzung nach einem der Ansprüche 1-2, wobei die Menge der Summe aus Stärke und dem einen oder den mehreren Polymeren (P) in der Klebstoffzusammensetzung zwischen 35 und 55 Gew-% beträgt.

4. Klebstoffzusammensetzung nach einem der Ansprüche 1-3, wobei, wenn ein eine primäre Aminogruppe enthaltendes Polymer (P) aus einem Polyvinylamin besteht, das Molverhältnis von Aminogruppen zu Formamidgruppen von 5:95 bis 100^{:}0 beträgt.

5. Klebstoffzusammensetzung nach einem der Ansprüche 1-4, wobei das Polymer (P) aus Polyvinylamin besteht.

6. Klebstoffzusammensetzung nach einem der Ansprüche 1-5, mit einem Polymer oder Copolymer aus einem oder mehreren ethylenisch ungesättigten Monomeren, welches zweckmäßigerweise kein Amino- oder Amidgruppen umfasst.

7. Klebstoffzusammensetzung nach Anspruch 6, wobei das Polymer oder Copolymer ein Vinylester-Homopolymer oder ein Vinylester-Copolymer ist.

8. Klebstoffzusammensetzung nach einem der Ansprüche 1-7, mit einem Acetoacetoxygruppen enthaltenden Polymer.

9. Klebstoffzusammensetzung nach einem der Ansprüche 1-8, mit einer weiteren Klebstoffzusammensetzung auf der Basis einer Dispersion eines Polymers oder Copolymers aus einem oder mehreren ethylenisch ungesättigten Monomeren.

10. Klebstoffzusammensetzung nach Anspruch 9, wobei das Polymer oder Copolymer aus einem Vinylester-Homopolymer oder einem Vinylester-Copolymer besteht.

11. Klebstoffzusammensetzung nach einem der Ansprüche 9-10, wobei die Menge an stärkebasiertem Klebstoff zwischen 25 und 75 Gew-% bezogen auf den gesamten feuchten Klebstoff beträgt.

12. Verfahren zur Herstellung einer Klebstoffzusammensetzung nach einem der Ansprüche 1-11, mit dem Schritt des Mischens von Stärke und einem oder mehreren, eine primäre Aminogruppe enthaltenden Polymeren (P) in einer wässrigen Phase bei einer erhöhten Temperatur zwischen 55 und 99 °C, um die Stärke zumindest teilweise zu gelieren, wobei das eine oder die mehreren Polymere (P) zu der Gruppe von Polyvinylamin und Poly(vinylalkohol-co-Vinylamin) gehören, und wobei die Menge an Stärke in der Klebstoffzusammensetzung zwischen 15 und 40 Gew-% beträgt und die Menge von einem oder mehreren Polymeren (P) in der Klebstoffzusammensetzung zwischen 2 und 25 Gew-% beträgt.

13. Verfahren nach Anspruch 12, wobei die erhöhte Temperatur zwischen 55 und 65°C beträgt.

14. Verfahren nach einem der Ansprüche 12-13, wobei die erhöhte Temperatur mindestens 1 Minute lang aufrechterhalten wird.

15. Verfahren zum Verkleben von holzbasierten Materialien, mit dem Schritt des Aufbringens der Klebstoffzusammensetzung nach einem der Ansprüche 1-11 auf ein oder mehr Teile eines holzbasierten Materials sowie des Verbindens des einen oder der mehreren Teile mit einem oder mehreren weiteren Teilen eines Materials.

16. Verfahren nach Anspruch 15, mit dem Schritt des Aufbringens der Klebstoffzusammensetzung auf ein Teil aus holzbasiertem Material, des Inkontaktbringens der Oberfläche mit der aufgebrachten Klebstoffzusammensetzung mit einer Oberfläche eines weiteren Teils aus holzbasiertem Material, wodurch die Teile durch die Bildung einer Klebstoffverbindung zwischen den Teilen verbunden werden.

17. Verfahren nach einem der Ansprüche 15-16, mit dem Schritt des Verbindens von mehre als zwei Teilen aus holzbasierten Materialien.

18. Verfahren nach einem der Ansprüche 15-17, mit dem Schritt des Verklebens von Teilen aus holzbasierten Materialien, wobei die Teile aus holzbasierten Materialien aus Holzspänen bestehen.

19. Holzbasiertes Produkt, das Teile aus holzbasiertem Material umfasst, welche mit einer Klebstoffzusammensetzung nach einem der Ansprüche 1-11 verbunden sind.

20. Holzbasiertes Produkt nach Anspruch 19, mit einer oder mehreren Schichten, die mit einer oder mehreren Klebeverbindungen verbunden sind, welche eine Klebstoffzusammensetzung nach einem der Ansprüche 1-11 umfassen.

21. Holzbasiertes Produkt nach Anspruch 19, mit holzbasierten Spänen, die mit einer Klebstoffzusammensetzung nach einem der Ansprüche 1-11 verbunden sind.

## Revendications

1. Composition adhésive comprenant de l'amidon au moins partiellement gélatinisé et un ou plusieurs polymère(s) (P) contenant un groupe amine primaire, dans laquelle le ou les plusieurs polymère(s) (P) appartient/appartiennent au groupe de polyvinylamine et de poly(alcool vinylique-co-vinylamine), et dans laquelle la quantité d'amidon dans la composition adhésive est comprise entre 15 et 40% en poids, et la quantité d'un ou de plusieurs polymère(s) (P) dans la composition adhésive est comprise entre 2 et 25% en poids.

2. Composition adhésive selon la revendication 1, dans laquelle la quantité de la somme d'amidon et du ou des plusieurs polymère(s) (P) dans la composition adhésive est comprise entre 35 et 60% en poids.

3. Composition adhésive selon l'une quelconque des revendications 1 et 2, dans laquelle la quantité de la somme d'amidon et du ou des plusieurs polymère(s) (P) dans la composition adhésive est comprise entre 35 et 55% en poids.

4. Composition adhésive selon l'une quelconque des revendications 1 à 3, dans laquelle, si un polymère (P) contenant un groupe amine primaire est une polyvinylamine, le rapport molaire des groupes amine sur les groupes formamide est compris entre 5:95 et 100:0.

5. Composition adhésive selon l'une quelconque des revendications 1 à 4, dans laquelle le polymère (P) est une polyvinylamine.

6. Composition adhésive selon l'une quelconque des revendications 1 à 5, comprenant un polymère ou un copolymère d'un ou de plusieurs monomère(s) éthyléniquement insaturé(s), qui ne comprend pas avantageusement de groupes amine ou amide.

7. Composition adhésive selon la revendication 6, dans laquelle le polymère ou le copolymère est un homopolymère d'ester vinylique ou un copolymère d'ester vinylique.

8. Composition adhésive selon l'une quelconque des revendications 1 à 7, comprenant un polymère contenant des groupes acétoacétoxy.

9. Composition adhésive selon l'une quelconque des revendications 1 à 8, comprenant une autre composition adhésive, à base d'une dispersion de polymère ou de copolymère d'un ou de plusieurs monomère(s) éthyléniquement insaturé(s).

10. Composition adhésive selon la revendication 9, dans laquelle le polymère ou le copolymère est un homopolymère d'ester vinylique ou un copolymère d'ester vinylique.

11. Composition adhésive selon l'une quelconque des revendications 9 et 10, dans laquelle la quantité d'adhésif à base d'amidon est comprise entre 25 et 75% en poids, par rapport à la quantité totale d'adhésif humide.

12. Procédé de fabrication d'une composition adhésive selon l'une quelconque des revendications 1 à 11, comprenant le mélange de l'amidon et d'un ou de plusieurs polymère(s) (P) contenant un groupe amine primaire, dans une phase aqueuse à une température élevée comprise entre 55 et 99°C jusqu'à gélatinisation au moins partielle de l'amidon, dans lequel le ou les plusieurs polymère(s) (P) appartient/appartiennent au groupe de polyvinylamine et de poly(alcool vinylique-co-vinylamine), et dans lequel la quantité d'amidon dans la composition adhésive est comprise entre 15 et 40% en poids et la quantité d'un ou de plusieurs polymère(s) (P) dans la composition adhésive est comprise entre 2 et 25% en poids.

13. Procédé selon la revendication 12, dans lequel la température élevée est comprise entre 55 et 65°C.

14. Procédé selon l'une quelconque des revendications 12 et 13, dans lequel la température élevée est maintenue pendant au moins 1 minute.

15. Procédé de collage de pièces de matériaux à base de bois comprenant l'application de la composition adhésive de l'une quelconque des revendications 1 à 11 sur une ou plusieurs pièce(s) d'un matériau à base de bois, et l'assemblage de la ou des plusieurs pièces avec une ou plusieurs autre(s) pièce(s) d'un matériau.

16. Procédé selon la revendication 15, comprenant l'application de la composition adhésive sur une pièce de matériau à base de bois, la mise en contact de la surface ayant la composition adhésive appliquée avec une surface d'une autre pièce de matériau à base de bois, assemblant ainsi les pièces par la formation d'un joint adhésif entre les pièces.

17. Procédé selon l'une quelconque des revendications 15 et 16, comprenant l'assemblage de plus de deux pièces de matériaux à base de bois.

18. Procédé selon l'une quelconque des revendications 15 à 17, comprenant le collage de pièces de matériaux à base de bois, dans lequel les pièces de matériau à base de bois sont des copeaux de bois.

19. Produit à base de bois comprenant des pièces de matériau à base de bois assemblées avec une composition adhésive selon l'une quelconque des revendications 1 à 11.

20. Produit à base de bois selon la revendication 19, comprenant une ou plusieurs couche(s), assemblée(s) avec un ou plusieurs joint(s) adhésif(s) comprenant une composition adhésive selon l'une quelconque des revendications 1 à 11.

21. Produit à base de bois selon la revendication 19, comprenant des copeaux à base de bois assemblés avec une composition adhésive selon l'une quelconque des revendications 1 à 11.
